# EUROPEAN PATENT SPECIFICATION

(11) **EP 1 154 915 B1**
(45) Date of publication and mention of the grant of the patent: **16.04.2003**
(21) Application number: 00903054.5
(22) Date of filing: 03.02.2000
(51) Int. Cl.: B60R 19/02

(54) **BUMPER BEAM**
STOSSSTANGE
POUTRE DE PARE-CHOCS

(30) Priority: 03.02.1999 NO 990503
(43) Date of publication of application: 21.11.2001
(73) Proprietor: NORSK HYDRO ASA, 0240 Oslo (NO)
(72) Inventor: HOILAND, Thorbjorn, N-2830 Raufoss (NO); PEDERSEN, Roald, Helland, N-2818 Gjovik (NO); STJERN, Tor, Arne, N-2830 Raufoss (NO)
(74) Representative: Patentanwälte Leinweber & Zimmermann
(86) International application number: NO0000035
(87) International publication number: WO00046074

(56) References cited:
- WO-A1-93/04897
- WO-A1-97/27082
- WO-A1-99/15365
- DE-A1- 19 519 110
- GB-A- 1 501 991

## Description

The present invention relates to a bumper beam, more particularly an integrated bumper beam of simplified design for vehicles.

Different designs of an open bumper beam of generally U- or hat-shaped configuration with laterally extending fastening flanges are presently known manufactured both from steel and Al-alloys material by conventional reshaping of blank or sheet.

GB 1 501 991 A discloses a bumper according to the preamble of claim 1.

However, several disadvantages inherent in the hitherto applied manufacturing/shaping methods characterized the presently known bumper beams. Generally such open beams exhibit low stability with regard to local buckling and require rather thick (and heavy) walls in order to achieve required crash performance (energy absorption). This means increased material costs and weight of the components due to a necessity to reinforce the beam incorporating internal strengthening walls and thus causing a higher fuel consumption for the vehicle.

Furthermore, the conventional shaping methods do not allow for a more flexible design of beams such as incorporation of additional structural functions and/or attachment flexibility of the bumper beam to the structural frame of the vehicle.

An object of the invention is to provide a novel open bumper beam resulting in reduced material consumption and waste material and bumper beams exhibiting improved crash performance and lower weight and assembling costs.

Another object of the present invention is to provide a novel bumper beam allowing for a more flexible design of the beams, allowing direct assembling to the vehicle frame structure and simultaneously achieving a longest possible deformation distance to the vehicle space frame (side members of the frame).

These and other objects of the present invention are met by provision of a novel bumper beam as defined in the attached patent claim 1, the preferred embodiments of the beam as appears from the dependent claims 2-5.

The invention will now be described in details by way of examples of preferred embodiments of the bumper beam in the following description referring to the attached drawings, Figs. 1-6, where
- Figs. 1a,b: show schematically in a perspective (partial) view the novel open bumper beam design as a front view and rear view, respectively,
- Fig. 2: illustrates in a perspective fragmentary view the detail of attachment area,
- Fig. 3: shows schematically in a top view the principle of integrating additional function(s) in a one-piece bumper beam, and
- Figs. 4a,b,c,d: illustrate schematically the flexibility of providing different connections between the beam and vehicle frame structure,
- Figs. 5a,b,c: show another preferred embodiment(s) of the bumper beam according to the present invention, and
- Figs. 6a,b: illustrates schematically in a perspective view a closed shape type of bumper which is not part of the present invention.

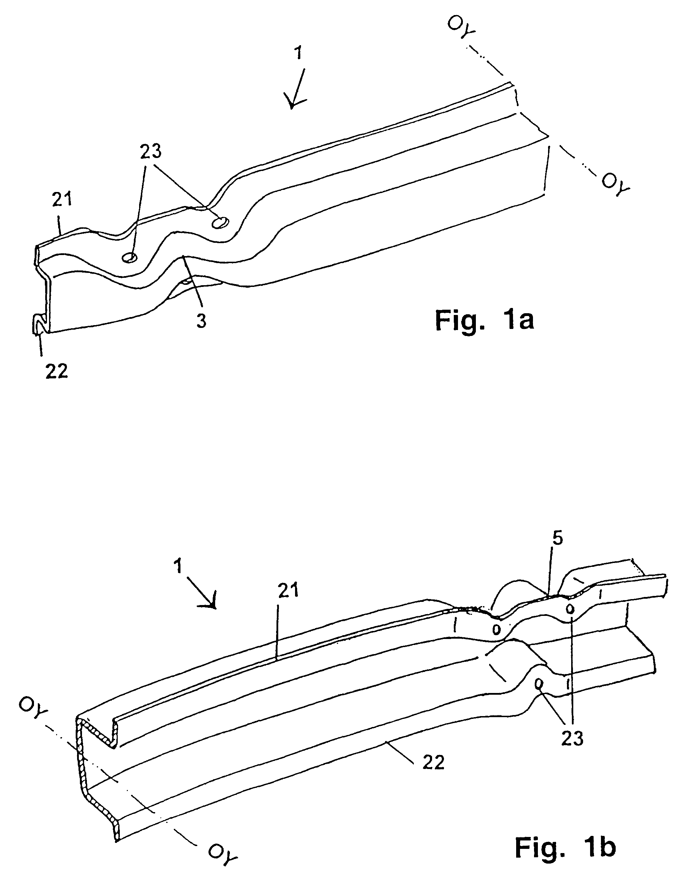

Referring to Fig. 1, a novel bumper beam 1 according to the present invention is shown schematically in a perspective partial front view (Fig. 1a) as a half part of the beam divided by central line OY.

Starting from a conventionally provided U-shaped beam 2, either ready extruded or reshaped/rolled from a flat blank exhibiting a pair of laterally extending webs 21,22, the beam being exposed to a simultaneous reshaping along all three main axes during the forming operation, transfers in preselected areas of the beam, e.g. at both ends of the beam, into a novel manipulated beam configuration member 3. Thanks to the controlled material flow along all three axes new integrated parts laterally protruding beyond the extension of the original configuration of the webs 21,22 are provided in the reshaping operation. Such new integrated stiffening structural parts can represent an improved flexible attachment for the beam to the vehicle frame or even an integrated energy absorbing crash box member 5 as illustrated in Fig. 1b.

The flexibility of the attachment, thanks to the achieved local displacement and prolongation of the webs 21,22, ensures as shown in the Figures that apertures 23 provided for conventional fastening means as screws, bolts etc. (not shown) can be adjusted/located at a higher/lower level (lateral adjustment) according to available space and/or configuration of the actual connected vehicle frame members.

Furthermore, other configurations and combinations of the apertures 23 than the shown one is facilitated, e.g. a scattered pattern in one or several rows (levels).

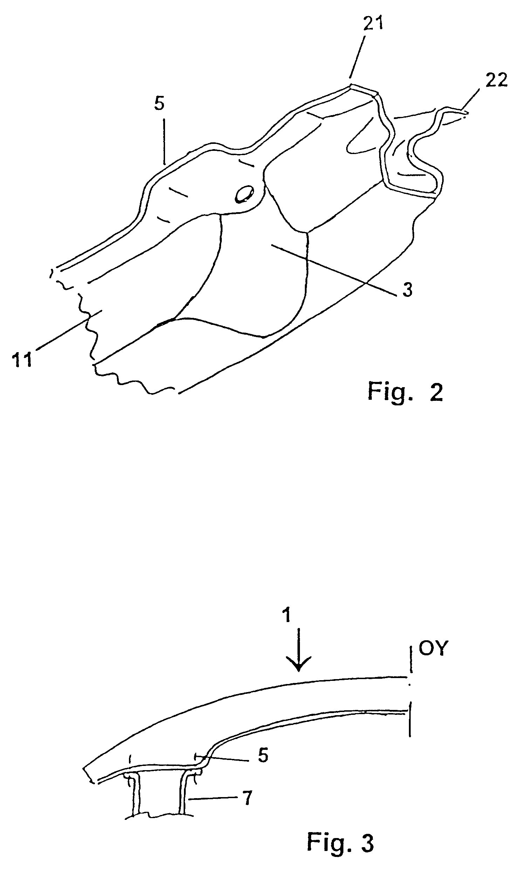

The extent of material flow resulting from the plastic reshaping during the forming operation due to the fact that the reshaping takes place in all three dimensions can be seen more clearly from Fig. 2 showing in an exploded fragmentary view how both the central to hat portion 11 of the beam and the laterally extending webs 21,22 are exposed to a forming operation. The excess of material provided in this way forms an integrated structural element member 3 extending laterally/protruding beyond the original flanges 21,22. This new integrated element 3 can advantageously be shaped and applied as an energy absorbing crash box 5 having an outer contour adapted/complying with the orientation of e.g. side member 7 as schematically shown in Fig. 3.

Apart from improving the local buckling resistance and increasing the crash energy absorption in thus reshaped localities, also increased stiffness is achieved thanks to the special reshaping of the material. Furthermore, the need for an extra (conventional) energy absorbing unit/member is eliminated.

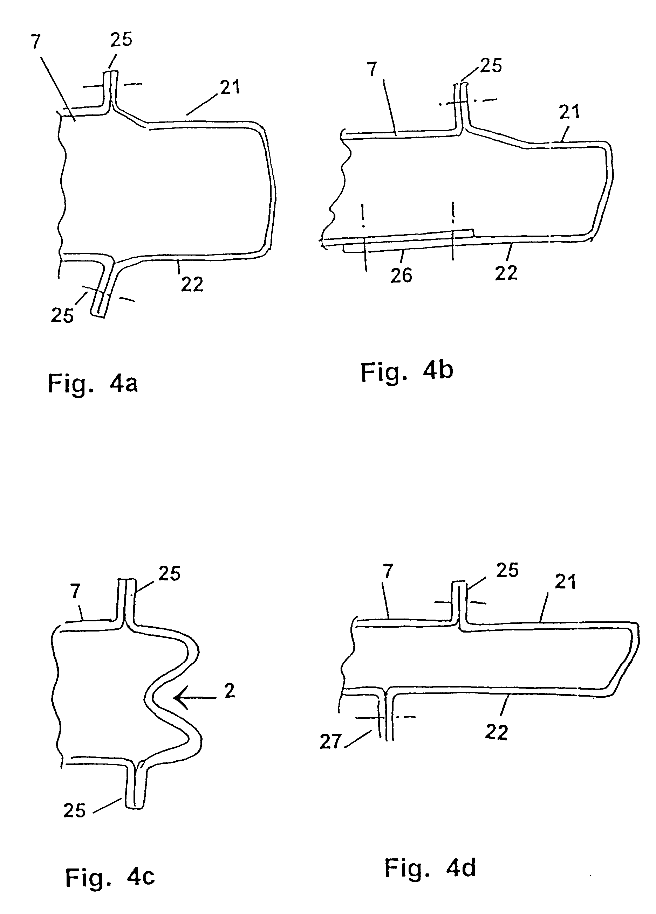

Figs. 4a-d illustrate schematically a further advantage resulting from the novel reshaping manufacturing method according to the present invention - provision of elongated flanges 21,22 in the three-dimensional manipulated areas of the beam. As shown in Fig. 4a illustrating prior art only a limited part of the webs 21,22 is available to form attachment surfaces for connection(s)/flange(s) 25 with the longitudinal front/rear side member 7 of the vehicle frame.

Thanks to the flexible controlled material flow different types of attachments can be achieved, e.g. an overlap configuration of the joint 26 ensuring possibility of vertical fastening of the web 22 as shown in Fig. 4b, higher/longer attachment flanges 25 thanks to the surplus of material available after reshaping of the U-member 2 as depicted in Fig. 4c, or lateral displacement of the jointed attachment 27 as shown in Fig. 4d.

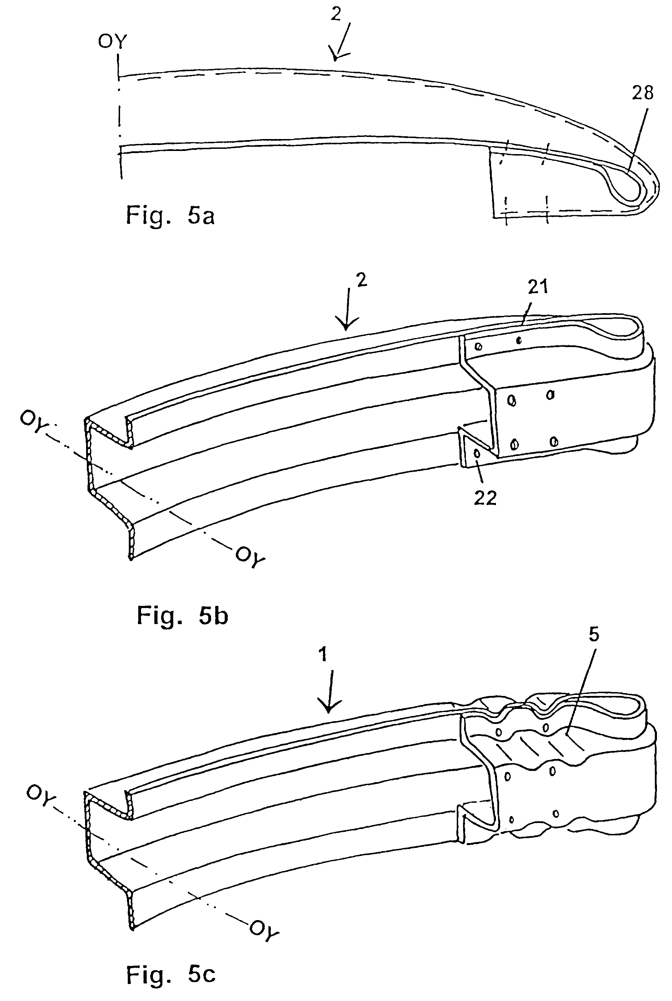

Figs. 5a,b,c illustrate schematically another preferred embodiment of the bumper beam according to the present invention. The essentially U-shaped member 2 is furthermore, additionally to the above described and illustrated three-dimensional reshaping deformation, subjected, at its respective ends 28, to a bending operation, resulting preferentially in an approximately 180° bend as shown in Fig. 5a being a schematical top view of the U-member 2.

The new achieved configuration of the end parts 25 of the U-shaped member 2 (shown in the Figures only as the right hand side of the member) is more clearly seen in Fig. 5b in a schematical perspective view.

In this way even more integral material of the beam is available to compensate for the actual (full) distance between a plastic cover of the bumper 1 (not shown in the Figures) and side members of the vehicle frame.

This is particularly useful when large amounts of energies are to be absorbed such as under high speed impacts, in heavy vehicles and in the front ends of vehicles.

Thus, the combination of reshaping and bending operation substantially increase the depth of the provided integral energy absorbing crash box member 5 as seen in Fig. 5c.

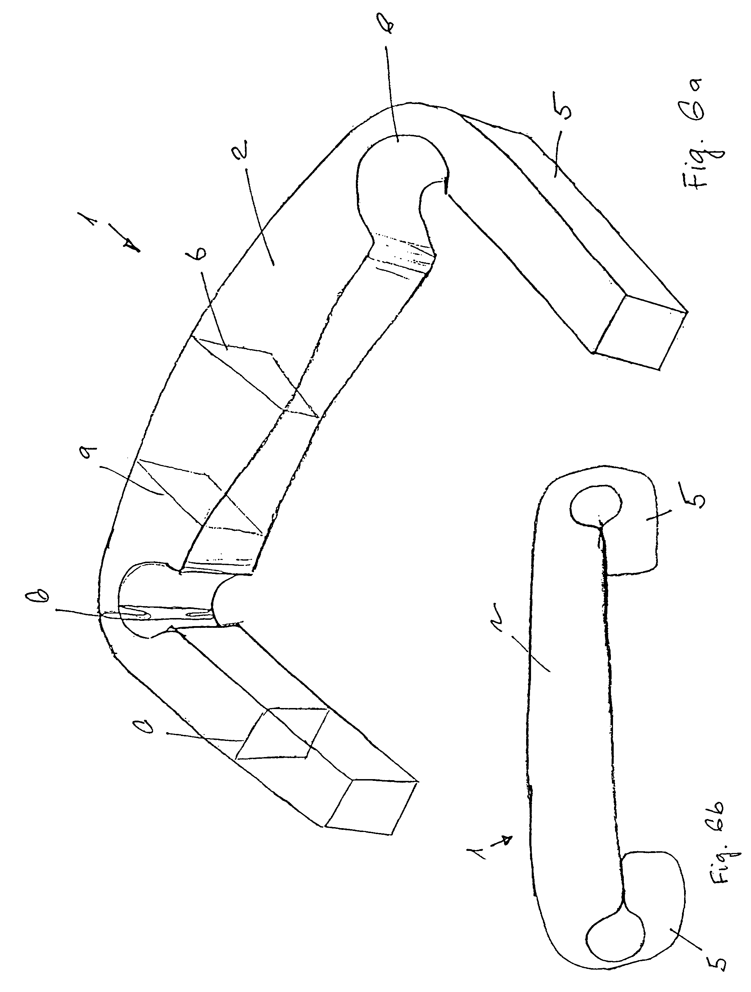

Still another variant of the novel integral bumper beam is illustrated in Figs. 6a,b, showing in a perspective view a bumper beam 1 comprising a closed shape member 2 being three dimensionally reshaped according to the present invention into the bumper beam incorporating combined attachment parts and crash box members 5.

Fig. 6a shows a bumper beam exhibiting variable cross-sectional configuration (sectional views a,b) resulting from the three-dimensional reshaping as in the present invention for an optimal weight/energy absorption performance ratio, thus allowing for a flexible design of the beam both with regard to available assembling space, visual impression/adaption to the vehicle design and last but not least improved energy absorbing characteristics of the bumper beam.

By 90° bending of the end parts of the closed shaped beam 2 a new cross-section c is achieved thanks to the special reshaping. No limitation with regard to the side length of the bumper beam is thus achieved. The integrated beam sides act at the same time as crash box members 5 offering also a longer path for energy absorption and a better control with deformation of the beam upon an impact since the integrated "joints" 6 act as an initiator of deformation of the crash boxes 5.

Fig. 6b illustrates schematically a variant of the bumper beam 1 where in corresponding matter, as shown in Figs. 5a,b,c covering the U-shaped based beam, the three-dimensional reshaping is conducted by a 180° bending operation providing integrated crash boxes 5.

The inherent advantages in applying a closed extruded shape compared to an open U-shaped member are higher stiffness and generally better energy absorbing characteristics.

The beam is preferentially three-dimensionally formed from an extruded light metal profile such as aluminium alloy and particularly heat treatable Al-alloys, but also other materials, e.g. steel is applicable.

## Claims

1. Bumper beam exhibiting increased stability and crash energy absorption characteristics in defined areas/localities along its longitudinal extension,
**characterized in that**
the bumper beam comprises a U-shaped member (2) being locally subjected to reshaping along its all three main axes exhibits two or more areas having laterally extending protruding parts (3), said parts being an integral part of the member (2), interconnected by transfer areas of substantially unchanged cross-sectional configuration of the U-shaped member (2) and where the end parts of the U-shaped member (2) are bent up to 180° providing integrated crash box members (5).

2. Bumper beam according to claim 1,
**characterized in that**
the member (2) is provided with laterally extending webs (21,22,26) and where the reshaped webs act as flanges or attachment parts (3) connecting the bumper beam to the longitudinal side members (7) in a vehicle frame.

3. Bumper beam according to claim 1 or 2,
**characterized in that**
the member (2) is provided as an extruded closed shaped or U-shaped member.

4. Bumper beam according to claim 1 or 2,
**characterized in that**
the member (2) is fabricated from a blank material

5. Bumper beam according to one or more preceding claims,
**characterized in that**
the member (2) is made of Al-alloy.

## Patentansprüche

1. Stoßstangenträger mit erhöhter Stabilität und gesteigerten Aufprallenergieabsorptionseigenschaften in definierten Bereichen/Stellen entlang seines Verlaufes in Längsrichtung,
**dadurch gekennzeichnet, daß**
der Stoßstangenträger ein U-förmiges Element (2) enthält, das örtlich entlang allen seinen drei Hauptachsen einer Umformung unterzogen wurde und zwei oder mehr Bereiche aufweist, die seitlich verlaufende vorspringende Teile (3) haben, welche Teile ein integraler Teil des Elements (2) sind, die durch Übergangsbereiche mit im wesentlichen unveränderter Querschnittskonfiguration des U-förmigen Elements (2) verbunden sind, wobei die Endteile des U-förmigen Elements (2) bis zu 180° gebogen werden und integrierte Prallboxelemente (5) bilden.

2. Stoßstangenträger nach Anspruch 1,
**dadurch gekennzeichnet, daß**
das Element (2) mit seitlich verlaufenden Wangen (21, 22, 26) versehen ist, wobei die umgeformten Wangen als Flansche oder Befestigungsteile (3) dienen, die den Stoßstangenträger mit den in Längsrichtung verlaufenden Seitenelementen (7) in einem Fahrzeugrahmen verbinden.

3. Stoßstangenträger nach Anspruch 1 oder 2,
**dadurch gekennzeichnet, daß**
das Element (2) als ein stranggepreßtes, geschlossen geformtes oder U-förmiges Element vorgesehen ist.

4. Stoßstangenträger nach Anspruch 1 oder 2,
**dadurch gekennzeichnet, daß**
das Element (2) aus einem Rohlingmaterial hergestellt wird.

5. Stoßstangenträger nach einem der vorstehenden Ansprüche,
**dadurch gekennzeichnet, daß**
das Element (2) aus Al-Legierung hergestellt ist.

## Revendications

1. Poutre de pare-chocs présentant des caractéristiques améliorées de stabilité et d'absorption d'énergie d'écrasement dans des zones/emplacements définis le long de son étendue longitudinale, **caractérisée en ce que** la poutre de pare-chocs comporte un élément en forme de U (2) étant soumis localement à une remise en forme le long de ses trois axes principaux présente deux ou plus de deux zones ayant des parties faisant saillie en s'étendant latéralement (3), lesdites parties faisant partie intégrante de l'élément (2), étant reliées mutuellement par des zones de transfert ayant la configuration en coupe sensiblement inchangée de l'élément en forme de U (2) et où les parties d'extrémité de l'élément en forme de U (2) sont incurvées jusqu'à 180° fournissant des éléments de boîte d'écrasement intégrés(5).

2. Poutre de pare-chocs selon la revendication 1, **caractérisée en ce que** l'élément (2) est muni de bandes s'étendant latéralement (21, 22, 26) et où les bandes remises en forme agissent comme des flancs ou des parties de fixation (3) reliant la poutre de pare-chocs aux éléments latéraux longitudinaux (7) d'un châssis de véhicule.

3. Poutre de pare-chocs selon la revendication 1 ou 2, **caractérisée en ce que** l'élément (2) est fourni sous la forme d'un élément extrudé ayant une forma fermée ou une forma en U.

4. Poutre de pare-chocs selon la revendication 1 ou 2, **caractérisée en ce que** l'élément (2) est fabriqué à partir d'un matériau d'ébauche.

5. Poutre de pare-chocs selon l'une quelconque des revendications précédentes, **caractérisée en ce que** l'élément (2) est constitué d'alliage de Al.
